Europäisches Patentamt

European Patent Office

Office européen des brevets

(11) Veröffentlichungsnummer: **0 306 872**
**A2**

(19)

(12) **EUROPÄISCHE PATENTANMELDUNG**

(21) Anmeldenummer: 88114429.9

(22) Anmeldetag: 03.09.88

(51) Int. Cl.4: **C08K 3/22 , C08L 77/02 , C08G 69/14**

(30) Priorität: **11.09.87 DE 3730538**

(43) Veröffentlichungstag der Anmeldung:
**15.03.89 Patentblatt 89/11**

(84) Benannte Vertragsstaaten:
**BE CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Wehr, Rudolf, Dr.**
**Mandelring 15**
**D-6706 Wachenheim(DE)**

(54) **Polycaprolactame mit einem Gehalt an Titandioxid und dessen Verwendung.**

(57) Polycaprolactam mit einem Gehalt an Titandioxid, das bezogen auf Titandioxid weniger als 0,1 Gew.-% in Wasser von 100 °C lösliche Anteile sowie 2 bis 15 Gew.-% monomeres Caprolactam und dessen Oligomere, bezogen auf Polycaprolactam, enthält.

EP 0 306 872 A2

## Polycaprolacta mit einem Gehalt an Titandioxid und dessen Verwendung

Bei der Polymerisation von Caprolactam erhält man Polycaprolactam z.B. mit einem Gehalt von 8 bis 15 Gew.-% an monomerem Caprolactam und dessen Oligomeren. Für die Verarbeitung von Polycaprolactam zu geformten Teilen wie Fäden oder Spritzgußteilen ist jedoch ein niedriger Gehalt an solchen extrahierbaren Anteilen gefordert. Deshalb wird Polycaprolactam bei erhöhter Temperatur mit Wasser extrahiert. Um Caprolactamverluste zu vermeiden, werden die Extraktwässer aufkonzentriert, z.B. bis zu einem Gehalt von mindestens 80 % und wiederum ohne weitere Reinigung zusammen mit frischem Lactam der Polymerisationsstufe zugeführt. Ein geeignetes Verfahren wird beispielsweise beschrieben in der DE-AS 25 01 348. Um Ausfällungen während des Eindampfens zu vermeiden, die zur Belegung von Wärmetauscherflächen führen, wird entsprechend der EP-Anmeldung 123 881 dem einzudampfenden Extrakt Caprolactam zugesetzt, um von Anfang an einen ausreichenden Gehalt an Caprolactam aufrechtzuerhalten.

Häufig ist es jedoch erwünscht, durch Zusatz von Titandioxid, mattiertes Polycaprolactam herzustellen. Der Zusatz erfolgt in der Regel bereits bei der Polymerisation von Caprolactam, um eine gleichmäßige feine Verteilung zu bewirken. Wird nun nach dem Extrahieren eines Titandioxid enthaltenden Polycaprolactam der so erhaltene Extrakt eingedampft, beispielsweise wie in der EP-Anmeldung 123 881 beschrieben, so tritt trotz des Zusatzes von monomerem Caprolactam eine Belegung der Wärmetauscherflächen ein. Dies ist unerwünscht, da der Wärmeübergang vermindert wird und zudem weitere Abscheidungen verursacht werden, die zur Gelbildung führen.

Es war deshalb die technische Aufgabe gestellt, Titandioxid enthaltendes Polycaprolactam zur Verfügung zu stellen, daß nach Extraktion bei der Eindampfung der Extrakte nicht zur Belegung der Wärmeaustauscherflächen führt und zur Abscheidung von weiteren Stoffen Veranlassung gibt.

Diese technische Aufgabe wird gelöst durch Polycaprolactam mit einem Gehalt an Titandioxid, das, bezogen auf Titandioxid weniger als 0,1 Gew.-% in Wasser von 100° C lösliche Anteile sowie 8 bis 15 Gew.-% monomeres Caprolactam und dessen Oligomere, bezogen auf Polycaprolactam, enthält.

Ferner ist ein Gegenstand der Erfindung die Verwendung von Polycaprolactamen mit einem Gehalt an Titandioxid, das bezogen auf Titandioxid weniger als 0,1 Gew.-% in Wasser von 100° C lösliche Anteile sowie 8 bis 15 Gew.-% monomeres Caprolactam und dessen Oligomere, bezogen auf Polycaprolactam enthält, für die Herstellung von Polycaprolactam mit einem Gehalt von weniger als 1 Gew.-% monomeren Caprolactam oder dessen Oligomeren durch Extraktion mit Wasser bei einer Temperatur von 80 bis 130° C, Eindampfen des Extrakts und Wiederverwendung des erhaltenen Konzentrats zusammen mit frischem Caprolactam ohne weitere Reinigung für die Polymerisation.

Das erfindungsgemäße Titandioxid enthaltende Polycaprolactam hat den Vorteil, daß die bei der Extraktion mit Wasser erhaltenen Extrakte eingedampft werden können, ohne daß sich an den Wärmetauscherflächen Beläge bilden.

Das erfindungsgemäße Polycaprolactam hat vorteilhaft eine relative Viskosität von 2,2 bis 3,5. Ferner hat das erfindungsgemäße Polycaprolactam einen Gehalt von 8 bis 15, insbesondere 9 bis 12 Gew.-% an monomerem Caprolactam und dessen Oligomeren, bezogen auf Polycaprolactam. Ferner hat das erfindungsgemäße Polycaprolactam einen Gehalt an Titandioxid, z.B. von 0,1 bis 2,5 Gew.-%, insbesondere 0,1 bis 1,5 Gew.-%, vorzugsweise Anatas, das bezogen auf Titandioxid weniger als 0,1 Gew.-%, vorteilhaft von 0,01 bis 0,05 Gew.-% in Wasser von 100° C lösliche Anteile hat. Solche löslichen Anteile sind z.B. Siliziumdioxid oder Silikate. Vorzugsweise hat das Titandioxid einen Gehalt an in Wasser von 100° löslichen Siliziumverbindungen von weniger als 0,1 Gew.-%, z.B. von 0,01 bis 0,05 Gew.-% bezogen auf Titandioxid. Besonders vorteilhaft ist es, wenn das Titandioxid einen Gehalt von bis zu 5 Gew.-% Aluminiumoxid, z.B. von 0,5 bis 3 Gew.-% Aluminiumoxid, bezogen auf Titandioxid, hat.

Der Gehalt an löslichen Anteilen im Titandioxid wird wie folgt bestimmt: 25 g Titandioxid werden mit 250 ml demineralisiertem Wasser 24 Stunden unter Rückfluß gekocht, Titandioxid abfiltriert, das Filtrat zur Trockene eingedampft und der Rückstand gewogen.

Das erfindungsgemäße Polycaprolactam ist z.B. erhältlich durch Polymerisation von Caprolactam nach dem VK-Rohr-Verfahren, wobei man geschmolzenes Caprolactam zusammen mit Wasser, z.B. 0,3 bis 5 Gew.-% Wasser in geschmolzenem Zustand dem Kopf des VK-Rohres zuführt und unter Polymerisation bei einer Temperatur von 240 bis 280° C von oben nach unten durch das VK-Rohr leitet. Das Polymerisat wird unten z.B. in Stränge gegossen, gekühlt und granuliert. Titandioxid der oben angegebenen Qualität wird zweckmäßig z.B. als wäßrige Dispersion zusammen mit dem Caprolactam in die Polymerisation eingeführt. Andererseits ist es auch möglich, Titandioxid mit den obengenannten Eigenschaften dem schmelzflüssigem Polycaprolactam unter gutem Durchmischen, z.B. in einen Extruder, vorzugsweise als TiO₂-Konzentrat in Polycaprolactam, einzuverleiben.

Titandioxid mit den obengenannten Eigenschaften ist z.B. erhältlich, in dem man handelsübliches Titandioxid 10 bis 30 Stunden, insbesondere 10 bis 24 Stunden mit Wasser, vorteilhaft vollentsalztem Wasser, bei einer Temperatur von 90 bis 110°C, insbesondere 90 bis 100°C behandelt, anschließend Titandioxid durch Dekantieren abtrennt und gegebenenfalls nochmals mit Wasser von 100° wäscht.

Das erfindungsgemäße Polycaprolactam wird vorteilhaft für die Herstellung von Polycaprolactam mit einem Gehalt von weniger als 1 Gew.-%, insbesondere von 0,4 bis 0,8 Gew.-% monomeren Caprolactam und dessen Oligomeren durch Extraktion mit Wasser bei 80 bis 130°C, Eindampfen des Extrakts und Rückführen des erhaltenen Konzentrats zusammen mit frischem Caprolactam in die Polymerisation ohne weitere Reinigung verwendet.

Die Extraktion wird vorteilhaft durchgeführt, in dem man das erfindungsgemäße Polycaprolactamgranulat von oben nach unten durch eine Extraktionsvorrichtung leitet und von unten nach oben Wasser von 80 bis 130°C, insbesondere 90 bis 125°C, leitet. Das extrahierte Polycaprolactam mit einem Gehalt von weniger als 1 Gew.-% an Caprolactam und dessen Oligomeren wird unten entnommen und getrocknet, während am Kopf der Extraktionsvorrichtung ein wäßriger Extrakt anfällt, der in der Regel von 5 bis 20 Gew.-% Caprolactam und dessen Oligomere enthält. Dieser Extrakt wird vorteilhaft auf einen Feststoffgehalt von mindestens 80 % aufkonzentriert unter Ausschluß von Luftsauerstoff mit der Maßgabe, daß bei Feststoffkonzentrationen von mehr als 50 % Temperaturen von 130 bis 210°C und Verweilzeiten von nicht mehr als 30 Minuten angewandt werden und darüber hinaus die Extrakt berührten Oberflächen in rostfreiem Stahl ausgeführt sind. Zweckmäßig setzt man dem einzudampfenden Extrakt zusätzlich Caprolactam zu, um beim Eindampfen von vornherein einen ausreichenden Gehalt an Caprolactam aufrecht zu erhalten. Das so erhaltene Konzentrat wird wiederum für die Polymerisation zweckmäßig zusammen mit frischem Caprolactam ohne weitere Reinigung verwendet. Geeignete Verfahren sind beispielsweise beschrieben in der DE-AS 25 01 348 und der EP-Anmeldung 123 881.

Der Gegenstand der Erfindung sei an folgenden Beispielen veranschaulicht.

Beispiel 1

4000 kg Polycaprolactam der relativen Viskosität, 2,70 das 11 Gew.-% extrahierbare Anteile (9 Gew.-% Caprolactam und 2 Gew.-% Oligomere des Caprolactams) sowie 0,27 Gew.-% Titandioxid (Anatas mit 99 Gew.-% Titandioxid) das 0,03 Gew.-% in Wasser von 100°C lösliche Anteile enthält, wird mit 3000 kg/Stunde vollentsalztem Wasser im Gegenstrom bei einer Temperatur von 115 bis 125°C kontinuierlich extrahiert und anschließend bei einer Temperatur von 125 bis 135°C kontinuierlich unter Ausschluß von molekularem Sauerstoff getrocknet. Es werden 3580 kg/Stunde Polyamid 6 der relativen Viskosität 2,75 erhalten, das 0,3 Gew.-% Titandioxid, 0,5 Gew.-% extrahierbare Anteile (0,1 Gew.-% Caprolactam und 0,4 Gew.-% cyclische Oligomere des Caprolactams) und 0,03 Gew.-% Wasser enthält.

Die bei der Extraktion erhaltene wäßrige Lösung (3420 kg/Stunde mit 360 kg/Stunde Caprolactam und 65 kg/Stunde Oligomere des Caprolactams) wird zusammen mit 300 kg/Stunde Caprolactam kontinuierlich in zwei Stufen bei einer Temperatur von 115 bis 185°C und unter einem Druck von 1,1 bar abs. auf einen Feststoffgehalt von 98 Gew.-% eingedampft und ohne weitere Reinigung zusammen mit frischem Caprolactam der Polymerisation zugeführt.

Die zur Eindampfung des Extraktwassers verwendeten Vorrichtungen bleiben im Dauerbetrieb frei und ohne Belag.

Beispiel 2

4000 kg/Stunde Polycaprolactam der relativen Viskosität 2,72, das 0,26 Gew.-% Titandioxid (Anatas, 96 Gew.-% Titandioxid und 3 Gew.-% Aluminiumoxid) mit einem Gehalt von 0,04 Gew.-% in Wasser von 100°C löslichen Anteilen und 11,5 Gew.-% extrahierbare Anteile (9,5 Gew.-% Caprolactam und 2 Gew.-% cyclischen Oligomere des Caprolactams) enthält, wird wie in Beispiel 1 beschrieben, extrahiert.

Das bei der Extraktion erhaltene Extraktwasser wird wie in Beispiel 1 eingedampft und ohne weitere Reinigung zusammen mit Caprolactam der Polymerisation zugeführt.

Die zur Eindampfung des Extraktwassers verwendete Vorrichtung bleibt im Dauerbetrieb frei und ohne Belag.

Beispiel 3

4000 kg/Stunde Caprolactam der relativen Viskosität 2,70, das 0,27 Gew.-% Titandioxid (Anatas, 98 % Titandioxid, 1,5 Gew.-% Aluminiumoxid) mit 0,03 Gew.-% in Wasser von 100°C löslichen Anteilen und 11 Gew.-% extrahierbare Anteile enthält, wird wie in Beispiel 1 beschrieben, extrahiert. Das bei der Extraktion erhaltene Extraktwasser wird entsprechend Beispiel 1 eingedampft und ohne weitere Reinigung zusammen mit frischem Caprolactam polymerisiert.

Die zur Eindampfung des Extraktwassers verwendeten Vorrichtungen bleiben im Dauerbetrieb frei und ohne Belag.

## Beispiel 4

4000 kg/Stunde Caprolactam der relativen Viskosität 2,72, das 1,5 Gew.-% Titandioxid (Anatas, 99 Gew.-% Titandioxid) mit 0,02 Gew.-% in Wasser von 100°C löslichen Anteilen sowie 11 Gew.-% extrahierbare Anteile (9 Gew.-% Caprolactam und 2 Gew.-% cyclische Oligomere des Caprolactams) enthält, wird wie in Beispiel 1 beschrieben, extrahiert. Das bei der Extraktion erhaltene Extraktwasser wird entsprechend Beispiel 1 eingedampft und ohne weitere Reinigung mit frischem Caprolactam der Polymerisation zugeführt.

Die zur Eindampfung des Extraktwassers verwendeten Vorrichtungen bleiben im Dauerbetrieb frei und ohne Belag.

## Beispiel 5

4000 kg/Stunde Polycaprolactam der relativen Viskosität 2,71, das 1,5 Gew.-% Titandioxid (Anatas, 96 Gew.-% Titandioxid, 3 Gew.-% Aluminiumoxid) mit 0,03 Gew.-% in Wasser von 100°C löslichen Anteilen sowie 11 Gew.-% extrahierbare Anteile (9 Gew.-% Caprolactam und 2 Gew.-% cyclische Oligomere des Caprolactams) enthält, wird wie in Beispiel 1 beschrieben, extrahiert. Das bei der Extraktion erhaltene Extraktwasser wird entsprechend Beispiel 1 eingedampft und ohne weitere Reinigung zusammen mit frischem Caprolactam der Polymerisation zugeführt.

Die zur Eindampfung des Extraktwassers verwendeten Vorrichtungen bleiben im Dauerbetrieb frei und ohne Belag.

## Beispiel 6

4000 kg/Stunde Polycaprolactam der relativen Viskosität 2,72, das 1,5 Gew.-% Titandioxid (Anatas, 98 Gew.-% Titandioxid, 1,5 Gew.-% Aluminiumoxid) mit 0,02 Gew.-% in Wasser von 100°C löslichen Anteilen sowie 11 Gew.-% extrahierbare Anteile (9 Gew.-% Caprolactam und 2 Gew.-% Oligomere des Caprolactams) enthält, wird wie in Beispiel 1 beschrieben, extrahiert. Das bei der Extraktion erhaltene Extraktwasser wird entsprechend Beispiel 1 eingedampft und ohne weitere Reinigung zusammen mit frischem Caprolactam polymerisiert.

Die zur Eindampfung des Extraktwassers verwendeten Vorrichtungen bleiben im Dauerbetrieb frei und ohne Belag.

## Vergleichsbeispiel

4000 kg/Stunde Polycaprolactam der relativen Viskosität 2,70, das 0,26 Gew.-% Titandioxid (Anatas, 95 Gew.-% Titandioxid, 1,0 Gew.-% Siliciumdioxid, 0,3 Gew.-% Aluminiumoxid) mit 0,9 Gew.-% in Wasser von 100°C löslichen Anteilen sowie 11 Gew.-% extrahierbare Anteile (9 Gew.-% Caprolactam und 2 Gew.-% Oligomere des Caprolactams) enthält, wird wie in Beispiel 1 beschrieben, extrahiert. Das bei der Extraktion erhaltene Extraktwasser wird entsprechend Beispiel 1 eingedampft und ohne weitere Reinigung zusammen mit frischem Caprolactam der Polymerisation zugeführt.

Die zur Eindampfung des Extraktwassers verwendeten Vorrichtungen müssen regelmäßig gereinigt werden, da die Verdampferleistung nach 3 Wochen Betriebszeit ca. 30 % und nach 6 Wochen Betriebszeit um ca. 50 % abnimmt.

Der Belag in den Verdampfungseinrichtungen besteht zu 96 % aus $SiO_2$.

## Ansprüche

1. Polycaprolactam mit einem Gehalt an Titandioxid, das bezogen auf Titandioxid weniger als 0,1 Gew.-% in Wasser von 100°C lösliche Anteile sowie 2 bis 15 Gew.-% monomeres Caprolactam und dessen Oligomere, bezogen auf Polycaprolactam, enthält.

2. Polycaprolactam nach Anspruch 1 mit einem Gehalt an Titandioxid, das bezogen auf Titandioxid weniger als 0,1 Gew.-% in Wasser von 100°C lösliche Siliziumverbindungen enthält.

3. Polycaprolactam nach den Ansprüchen 1 und 2, mit einem Gehalt an Titandioxid, das 0,5 bis 3 Gew.-% Aluminiumoxid, bezogen auf Titandioxid, enthält.

4. Verwendung von Polycaprolactam nach den Ansprüchen 1 bis 3 für die Herstellung von Polycaprolactam mit einem Gehalt von weniger als 1 Gew.-% an monomerem Caprolactam oder dessen Oligomeren durch Extraktion mit Wasser bei einer Temperatur von 80 bis 130°C Eindampfen des Extrakts und Wiederverwendung des erhaltenen Konzentrats zusammen mit frischem Caprolactam ohne weitere Reinigung für die Polymerisation.